# EUROPEAN PATENT SPECIFICATION

(11) **EP 1 731 064 B1**
(45) Date of publication and mention of the grant of the patent: **31.03.2010**
(21) Application number: 06011602.7
(22) Date of filing: 06.06.2006
(51) Int. Cl.: A47J 31/06, A47J 31/46, A47J 31/44

(54) **Machine for preparing filtered beverages**
Gerät zur Herstellung gefilterter Getränke
Appareil pour la production de boissons filtrées

(30) Priority: 09.06.2005 IT TO20050392
(43) Date of publication of application: 13.12.2006
(73) Proprietor: Epifani, Giovanni, 10100 Torino (IT); Ventimiglia, Rosalba, 10100 Torino (IT)
(72) Inventor: Epifani, Giovanni, 10100 Torino (IT)
(74) Representative: Lotti, Giorgio

(56) References cited:
- EP-A- 1 302 141
- US-A- 4 649 809

## Description

The present invention refers to a machine adapted to make espresso coffee and different beverages such as tea or infusions, both hot and cold. Said machine may make use of capsules (small plastic containers for grounded coffee) as well as of loose coffee which is placed directly into the filter and the filter support.

A prior art machine of this type is presented in the document US-A-4 649 809.

Generally speaking, coffee machines on commerce are adapted to make exclusively hot coffee or hot tea/ infusions.

In order to get cold coffee, a very pleasant beverage during summer, the hot coffee should be poured into a special container so that it can be cooled down by means of traditional methods. In other words, chilled coffee cannot be prepared instantly the way hot coffee can.

It is an object of the present invention to provide a machine for making filtered beverages that overcomes the aforementioned drawback and can make both hot and cold beverages.

Said object is achieved by means of the present invention related to a machine for making filtered beverages characterised in what it is set forth in claim 1.

Further characteristics and advantages will become clearer from the following description referring to the appended drawing provided as non-restrictive example and in which:

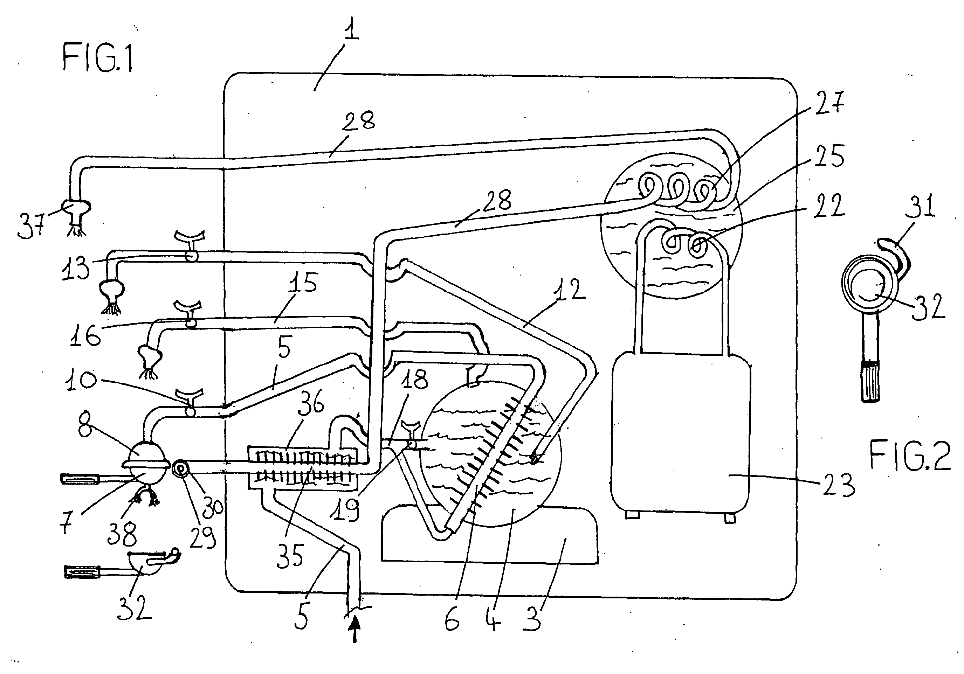

figure 1 schematically shows the apparatus of the machine according to the invention;
figure 2 is a magnified view of a detail of the apparatus in figure 1.

With reference to the figure, reference number 1 schematically indicates the case containing the machine. Inside the case there are a boiler 3 with a tank 4 for hot water, through which passes the water feed 5 for water used to prepare the beverage. Said feed, of an already known type, is provided with a heat exchanger 6 inside the tank for the hot water so that the cold water coming from the external feed is heated enough to prepare the beverage in the filter and filter support 7 connected to the joint 8 located at the end of the feed outside the case 1.

The amount of water passing through the feed 5 is controlled by means of a valve 10. It also possible to take hot water out from the tank 4 through a feed 12 by means of a respective control valve 13, or it is possible to take out steam through a feed 15 and a respective control valve 16. In order to do that, it is possible to put water inside the tank through a special feed 18 connected to the supply feed 5 and controlled by means of a valve 19.

According to the invention, inside the case 1 there is a cooling machine which coil 22, protruding from the compressor 23, passes through a tank 25 full of water or another fluid that can be cooled down. Through said tank 25, which can be considered as a heater exchanger, there passes also a second coil 27 of a capillary conduction feed 28, which allows to cool down the beverages prepared with the heated feeding water of feed 5. Said feed 28, which presents a hole varying from a minimum of 0.2 mm and a maximum of 2.0 mm, starts from a seat 29 provided, with a sealing ring 30, adapted to insert a coupling feed 31 made on a filter support 32 intended for the making of cold beverages like coffee or the like. The seat 29 will be placed on the machine near the joint 8 for the common filter support, which is also the joining point for the modified filter support 32. The feed 28 is provided with a heat exchanger 35 which is housed inside a small tank 36 made in series on the supply feed 5 for the cold water.

According to the invention, the machine for making cold filtered beverages works as follows.

When a cold beverage is wanted, the product, either loose or packed in capsules, is placed into the modified filter support which is inserted into the joint 8 and is rotated until the coupling feed 30 is engaged onto the seat 29 of the feed 28. Then some high temperature water fluid coming from the supply feed 5 is sent to said filter support 32. Said fluid passes into the tank 36 and afterwards into the tank 4 of the boiler 3 where it is taken to the desired temperature by means of the heat exchanger 6. The hot beverage filtered through the filter and the filter support 32 passes into the feed 28 in real time and stars cooling down while passing through the heat exchanger 36, which is cooled down by the supply fluid. It is then completely cooled down in the coil 27 located inside the chilled water 25 which temperature is controlled by the cooling compressor 23. The cold beverage is then served at the end 37 of the feed 28.

Hot beverages are made according to the previous description but using the common filter support 7 which pours the beverage directly into the cup through the nozzles 38.

People skilled in the art will easily understand that the different components of the machine can vary both in size and shape within the scope of the present invention. The present description refers to a machine of a mechanical type, but the same principle can be applied to automatic or semi-automatic machines as well, within the scope of the present invention.

## Claims

1. A machine adapted to make filtered beverages, both hot and cold, provided with a common filter support (7), a tank for hot water (4) controlled by means of a boiler (3), a supply feed (5) passing through said tank, a heat exchanger (6) on the supply feed located inside the tank and a joint (8) of a filter support (7, 32), said machine also including a feed (28) connectable to a filter support and provided with a coil (27) which is housed inside a tank for chilled water (25) controlled by a cooler (22, 23), said coil being adapted to operate as heat exchanger between the chilled water and the hot beverage inside the feed (28), **characterised in that** it includes a modified filter support (32) exchangeable with the common filter support (7) and provided with a coupling feed (31) intended for the engagement to the feed (28).

2. A machine as claimed in claim 1, **characterised in that** the feed (28) is a capillary conduction feed and presents a hole varying from a minimum of 0.2 mm and a maximum of 2.0 mm.

3. A machine as claimed in claim 1, **characterised in that** the feed (28) passes, with a heat exchanger (35), through a tank (36) placed in series on the supply feed before it enters into said tank for hot water (4).

4. A machine as claimed in claim 1 **characterised in that** the feed (28) starts from a seat (29) provided with a sealing ring (30).

## Patentansprüche

1. Maschine, eingerichtet zum Herstellen gefilterter heißer und kalter Getränke, aufweisend einen gewöhnlichen Filterträger (7), einen mittels eines Heißwassererzeugers (3) geregelten Tank (4) für heißes Wasser, eine durch den Tank verlaufende Versorgungsleitung (5), einen Wärmetauscher (6) an der Versorgungsleitung innerhalb des Tanks und ein Verbindungsstück (8) des Filterträgers, die Maschine ebenso beinhaltend eine Leitung (28), die mit einem Filterträger (7, 23) verbindbar ist und mit einer Spule (27) ausgestattet ist, die innerhalb eines Tanks (25) für kaltes Wasser untergebracht ist und durch einen Kühler (22, 23) geregelt wird, wobei die Spule dazu eingerichtet ist, als Wärmetauscher zwischen dem kalten Wasser und dem heißen Getränk innerhalb der Leitung (28) zu operieren,
**dadurch gekennzeichnet, dass** die Maschine einen modifizierten Filterträger (32) beinhaltet, der mit dem gewöhnlichen Filterträger (7) austauschbar ist und mit einer Koppelleitung (31) ausgestattet ist, die zum Koppeln mit der Leitung (28) vorgesehen ist.

2. Maschine nach Anspruch 1, **dadurch gekennzeichnet, dass** die Leitung (28) eine Kapillarleitung ist und eine Öffnung besitzt, zwischen einem Minimum von 0,2mm und einem Maximum von 2,0mm variiert.

3. Maschine nach Anspruch 1, **dadurch gekennzeichnet, dass** die Leitung (28) mit einem Wärmetauscher (35) durch einen Tank (36) verläuft, der vor dem Eintritt in den Tank (4) mit heißem Wasser mit der Zufuhrleitung in Reihe verläuft.

4. Maschine nach Anspruch 1, **dadurch gekennzeichnet, dass** die Leitung (28) an einem Sitz (29) beginnt, der mit einem Dichtring (30) ausgestattet ist.

## Revendications

1. Appareil conçu pour réaliser des boissons filtrées, tant chaudes que froides, ledit appareil étant équipé d'un support de filtre commun (7), d'un réservoir d'eau chaude (4) qui est contrôlé par une chaudière (3), d'une conduite d'alimentation (5) passant au travers dudit réservoir, d'un échangeur de chaleur (6) agencé sur la conduite d'alimentation, à l'intérieur du réservoir, et d'une jonction (8) pour un support de filtre (7, 32), ledit appareil comportant également une conduite (28) pouvant être reliée à un support de filtre et étant pourvue d'un serpentin (27) logé à l'intérieur d'un réservoir d'eau refroidie brusquement (25) qui est contrôlé par un refroidisseur (22, 23), ledit serpentin étant conçu pour fonctionner comme un échangeur de chaleur entre l'eau refroidie brusquement et la boissons chaude à l'intérieur de la conduite (28), **caractérisé en ce qu'**il comporte un support de filtre modifié (32) qui est échangeable avec le support de filtre commun (7) et est équipé d'une conduite de raccordement (31) destinée à venir en engagement avec la conduite (28).

2. Appareil selon la revendication 1, **caractérisé en ce que** la conduite (28) est une conduite de guidage capillaire présentant un passage de 0,2 mm au minimum, et de 2,0 mm au maximum.

3. Appareil selon la revendication1 **caractérisé en ce que** la conduite (28) passe, avec un échangeur de chaleur (35), au travers d'un réservoir (36) disposé en série sur la conduite d'alimentation en amont de l'entrée de celle-ci dans ledit réservoir d'eau chaude (4).

4. Appareil selon la revendication 1, **caractérisé en ce que** la conduite (28) part d'un siège- (29) équipé d'un joint d'étanchéité (30.).
